# EUROPEAN PATENT APPLICATION

(11) **EP 4 672 423 A1**
(43) Date of publication of application: **31.12.2025**
(21) Application number: 25180405.0
(22) Date of filing: 03.06.2025
(51) Int. Cl.: H01M 10/48, H01M 10/613, H01M 10/6556, H01M 50/209, H01M 50/284, H01M 50/522, H01M 50/581

(54) **BATTERY PACK AND ENERGY STORAGE SYSTEM**

(30) Priority: 28.06.2024 CN 202410867839
(71) Applicant: Huawei Digital Power Technologies Co., Ltd., Shenzhen, Guangdong 518043 (CN)
(72) Inventor: LUO, Yingjie, Shenzhen, Guangdong, 518043 (CN); WU, Wei, Shenzhen, Guangdong, 518043 (CN); Ma, Suxiao, Shenzhen, Guangdong, 518043 (CN); WANG, Ke, Shenzhen, Guangdong, 518043 (CN); ZHANG, Chunlei, Shenzhen, Guangdong, 518043 (CN)
(74) Representative: Maiwald GmbH

(57) **Abstract**

This application provides a battery pack. The battery pack is configured to accommodate a battery module, and the battery module includes a plurality of cells. In this application, thermistors are disposed on cells at a front end, the middle, and a rear end in the plurality of cells respectively, to learn of a temperature range of the entire battery pack and a temperature change rate of the battery pack, so that detection accuracy of a temperature of the battery pack can be ensured while quantities of collection components and collection ports in the battery pack are reduced.

## Description

### TECHNICAL FIELD

This application relates to the field of energy storage technologies, and in particular, to a battery pack and an energy storage system.

### BACKGROUND

To resolve problems such as global climate changes caused by extensive use of fossil energy, countries are actively seeking clean energy to replace the fossil energy, leading to a continuous increase in installations of wind power and photovoltaics. Due to instability, unbalance, and the like of clean energy power generation, electrochemical energy storage with high environmental adaptability, a high response speed, high power, high energy density, and other advantages is expected to become mainstream energy storage in the future. In addition, a higher requirement is imposed on safety of energy storage products. Thermal safety is among the most important safety performance of energy storage.

Temperature detection of an energy storage battery is crucial for detecting a state of charge of the energy storage battery, determining a thermal management requirement and a thermal safety status, and the like. A temperature of the battery is monitored in real time, so that potential risks such as overheating or overcooling of the battery can be effectively prevented. Therefore, a service life of the battery is prolonged, and safety of the battery is improved. To improve accuracy of temperature collection of a battery pack, a sampling point is usually set in each cell of the battery pack. This increases a quantity of collection ports, and complicates connections of collection wire harnesses inside the battery pack, resulting in an increase in a size and costs of the battery pack.

### SUMMARY

This application provides a battery pack. Thermistors are disposed on top cover surfaces of cells at a front end, the middle, and a rear end of the battery pack, so that a temperature range of the battery pack can be obtained while a quantity of temperature collection ports is reduced. This ensures temperature sampling accuracy and efficiency.

According to a first aspect, the battery pack is configured to accommodate a battery module, the battery module includes a plurality of cells, the plurality of cells are arranged in parallel, the plurality of cells include a first cell, a second cell, and a third cell, the first cell, the second cell, and the third cell are spaced apart in a length direction of the battery pack, the first cell is closer to a front panel of the battery pack than the second cell and the third cell, the third cell is closer to a rear panel of the battery pack than the second cell and the first cell, and the front panel and the rear panel are disposed opposite to each other in the length direction. The first cell located at a front end is closest to the front panel, and has a highest temperature change rate. The second cell located at the middle is far away from a side wall of a housing, effect of heat dissipation through the side wall of the housing is poor, and a temperature of the second cell is higher than that of another cell in a same module. The third cell located at a rear end is farthest away from the front panel. In addition, the third cell is closest to the side wall of the housing, the effect of heat dissipation through the side wall of the housing is the best, and a temperature of the third cell is generally lower than that of another cell in the same module. Therefore, in this application, thermistors are disposed on top cover surfaces of a cell with a highest temperature and a cell with a lowest temperature, to learn of a temperature range of the entire battery pack. In addition, a thermistor is disposed at a cell with a highest temperature change rate, to learn of a temperature change rate of the battery pack. In comparison with a solution in which a plurality of collection ports need to be provided for disposition of a thermistor on each cell, in a solution in which the thermistors are disposed only on the cell with the highest temperature, the cell with the lowest temperature, and the cell with the highest temperature change rate in the battery pack, fewer collection ports are required, so that a quantity of collection components in the battery pack can be reduced, collection wire harnesses inside the battery pack are simplified. Therefore, costs and a size of the battery pack are reduced.

In a possible implementation, the battery pack includes a wiring terminal, the wiring terminal is configured to output electric energy of the battery pack, the wiring terminal includes a positive wiring terminal and a negative wiring terminal, and a thermistor is disposed at each of the positive wiring terminal and the negative wiring terminal. The wiring terminal gathers a total output current of the battery pack, and a temperature of the wiring terminal is generally high. Therefore, in this embodiment of this application, the thermistor is disposed at each of the positive wiring terminal and the negative wiring terminal, to monitor a temperature change rate at the wiring terminal.

In a possible implementation, a fuse is disposed between the positive wiring terminal and a positive port of the battery module, another fuse is disposed between the negative wiring terminal and a negative port of the battery module, the fuse is provided with a thermistor, and the another fuse is provided with a thermistor, to detect temperatures of the fuses.

In a possible implementation, top patches are disposed on top cover surfaces of the first cell, the second cell, and the third cell, the top patch is provided with an opening, and the thermistor is disposed in the opening. The thermistor is mounted in the opening. The top patch limits the thermistor to some extent, to prevent the thermistor from falling off due to shaking in a process of moving the battery pack.

In a possible implementation, a thermally conductive adhesive is provided between the thermistor and a top cover surface of a cell on which the thermistor is disposed. The thermally conductive adhesive is provided between the thermistor and the top cover of the cell, so that a temperature difference between the thermistor and the top cover of the cell can be reduced. Therefore, temperature detection accuracy is improved.

In a possible implementation, the battery pack includes a circuit board, thermistors of the first cell, the second cell, and the third cell are all located on the circuit board, a conductive line is disposed on the circuit board, the thermistors are electrically connected to the conductive line, and the circuit board is located above the battery module. The thermistors are disposed on the circuit board, heat of the cells is transferred to the thermistors through the thermally conductive adhesive, and then temperature signals collected by the thermistors are transferred to an external circuit through the conductive line, to improve measurement accuracy of the thermistors.

In a possible implementation, any two adjacent cells in the plurality of cells are electrically connected through aluminum bars. A plurality of voltage collection sheets are disposed on the circuit board, the plurality of voltage collection sheets are spaced apart in an arrangement direction of the plurality of cells, the plurality of voltage collection sheets are separately disposed on the aluminum bars of the two adjacent cells, and the plurality of voltage collection sheets are respectively configured to collect voltages of the plurality of cells, to collect a voltage of the battery pack. In addition, the circuit board on which the thermistor is disposed is reused, so that a quantity of components inside the battery pack is simplified.

In a possible implementation, a voltage collection sheet on the top cover surface of the first cell and the thermistor on the top cover surface of the first cell are spaced apart, a voltage collection sheet on the top cover surface of the second cell and the thermistor on the top cover surface of the second cell are spaced apart, and a voltage collection sheet on the top cover surface of the third cell and the thermistor on the top cover surface of the third cell are spaced apart. The voltage collection sheet and the thermistor are spaced apart, so that mixing of a voltage collection line and a temperature collection line on the circuit board can be avoided, the voltage collection line and the temperature collection line are disposed independently, and traces on the circuit board are simplified.

In a possible implementation, the battery pack includes a cooling plate. The cooling plate is configured to dissipate heat for the plurality of cells, and a coolant flows in the cooling plate, to improve a heat dissipation capability of the battery pack.

In a possible implementation, when the temperature change rate of the first cell is greater than or equal to a first threshold, a flow speed of the coolant in the cooling plate is increased, the battery pack stops charging/discharging, and/or the battery pack generates a thermal runaway alarm. For example, when a temperature rise rate of the first cell is excessively high in a short time, it indicates that thermal runaway may already occur on a cell in the battery pack. In this case, the battery pack quickly takes a corresponding thermal management measure, to avoid burning and explosion of the battery pack.

In a possible implementation, when a temperature of the second cell is greater than or equal to a second threshold, a flow speed of the coolant in the cooling plate is increased, the battery pack stops charging/discharging, and/or the battery pack generates a thermal runaway alarm. When a temperature of the third cell is less than or equal to a third threshold, a flow speed of the coolant in the cooling plate is reduced, the battery pack stops charging/discharging, the battery pack is heated, and/or the battery pack generates a low temperature alarm. When the temperature of the cell is abnormal, the battery pack is cut off from a charging/discharging loop in time, and takes measures such as increasing the temperature or cooling, to make the battery pack quickly restore to a normal temperature, and generates the alarm, so that safety of the battery pack is improved.

In a possible implementation, when a temperature of the thermistor at the positive wiring terminal or the negative wiring terminal is greater than or equal to a fourth threshold, a flow speed of a coolant in a cooling plate is increased, the battery pack stops charging/discharging, and/or the battery pack generates a thermal runaway alarm. When the temperature of the wiring terminal is excessively high, it indicates that the battery pack may have a thermal runaway risk, and a thermal management measure should be taken in time, to avoid burning and explosion of the battery pack.

In a possible implementation, when a temperature of the thermistor at the fuse or the thermistor at the another fuse is greater than or equal to a fifth threshold, a flow speed of a coolant in a cooling plate is increased, the battery pack stops charging/discharging, and/or the battery pack generates a thermal runaway alarm. When the temperature of the fuse is excessively high, it indicates that the battery pack may have a thermal runaway risk, and a thermal management measure should be taken in time, to avoid burning and explosion of the battery pack.

In a possible implementation, thermistors are disposed on top cover surfaces of at least some cells other than the first cell, the second cell, and the third cell in the plurality of cells, the thermistors on the top cover surfaces of the at least some cells are connected in series, and when a thermistor on a top cover surface of one cell in the at least some cells is faulty, an average temperature of the other cells of the at least some cells is used as a temperature of the one cell. The thermistors are disposed on the top cover surfaces of the other cells to detect temperatures of the other cells. In other words, the thermistors are disposed on the cells other than those with extreme temperature values. The thermistors may be connected in series through disposition at a spacing. In this way, a quantity of detection ports is reduced while the detection accuracy is improved.

In a possible implementation, a switch is connected in parallel to two ends of each of the thermistors on the top cover surfaces of the at least some cells. When the switch is turned off, the thermistors on the top cover surfaces of the at least some cells are configured to detect temperatures of the at least some cells; or when the switch is turned on, the thermistors on the top cover surfaces of the at least some cells stop working. If a thermistor of a specific cell is faulty, switches connected in parallel to two ends of the thermistor may be turned on, to bypass the faulty thermistor, so that an entire collection loop is not affected. In addition, an average temperature of adjacent cells may be used as a temperature of the cell corresponding to the faulty thermistor, to improve temperature collection efficiency of the cell.

In a possible implementation, the thermistors are disposed on the top cover surfaces of the at least some cells other than the first cell, the second cell, and the third cell in the plurality of cells, the battery pack is configured to: detect the temperatures of the second cell and the third cell and the temperatures of the at least some cells within fixed interval duration, and calculate temperature differences between the second cell and the at least some cells and temperature differences between the third cell and the at least some cells. When the thermistor on the top cover surface of the second cell or the third cell is faulty, the battery pack is configured to: calculate the temperature of the second cell based on the temperature differences between the second cell and the at least some cells and the temperatures of the at least some cells, or calculate the temperature of the third cell based on the temperature differences between the third cell and the at least some cells. In this way, a case in which the temperatures of the first cell and the second cell cannot be learned in time after the temperatures of the thermistors on the top cover surfaces of the second cell and the third cell are faulty is avoided, and detection efficiency of the temperature of the cell is improved.

According to a second aspect, this application provides an energy storage cabinet. The energy storage cabinet includes at least one battery cluster, the battery cluster includes a plurality of battery packs, and the plurality of battery packs are stacked. When the temperature change rate of the first cell is greater than or equal to the third threshold, a battery cluster in which the first cell is located stops charging/discharging; when the temperature of the second cell is greater than or equal to the second threshold, a battery cluster in which the second cell is located stops charging/discharging; and/or when the temperature of the third cell is less than or equal to the third threshold, a battery cluster in which the third cell is located stops charging/discharging. The battery pack is used inside the energy storage cabinet, so that working of an entire battery cluster can be stopped when a temperature of the battery pack is excessively high or excessively low. Therefore, a risk of burning and explosion of the energy storage cabinet can be reduced.

In a possible implementation, when the temperature change rate of the first cell is greater than or equal to the third threshold, the energy storage cabinet generates a thermal runaway alarm; when the temperature of the second cell is greater than or equal to the second threshold, the energy storage cabinet generates a thermal runaway alarm; and/or when the temperature of the third cell is less than or equal to the third threshold, the energy storage cabinet generates a low temperature alarm. When the temperature or a temperature change rate of the battery pack is excessively high, the thermal runaway alarm is generated, to enhance user perception and perform maintenance in time.

### BRIEF DESCRIPTION OF DRAWINGS

FIG. 1 is a diagram of a structure of a battery pack according to an embodiment of this application;
FIG. 2 is an exploded view of a structure of a battery module according to an embodiment of this application;
FIG. 3 is a diagram of a structure of a circuit board according to an embodiment of this application;
FIG. 4 is a top view of a battery module according to an embodiment of this application;
FIG. 5 is a diagram of a structure of a panel of a battery pack according to an embodiment of this application;
FIG. 6 is an enlarged view at a position A in FIG. 5; and
FIG. 7 is a diagram of a connection between thermistors connected in series according to an embodiment of this application.

### Reference numerals:

200: battery pack; 201: cell; 2011: first cell; 2012: second cell; 2013: third cell; 202: thermistor; 2021: first thermistor; 2022: second thermistor; 2023: third thermistor; 203: circuit board; 2031: voltage collection sheet; 204: bracket; 205: switch; 206: battery module; 207: positive wiring terminal; 208: negative wiring terminal; 209: first fuse; 210: second fuse; 211: housing; 212: positive interface; 213: negative interface; 214: connection aluminum bar; 215: front panel.

### DESCRIPTION OF EMBODIMENTS

To make the objectives, technical solutions, and advantages of this application clearer, the following further describes this application in detail with reference to the accompanying drawings. However, example implementations can be implemented in a plurality of forms, and should not be construed as being limited to the implementations described herein. Identical reference numerals in the accompanying drawings denote identical or similar structures. Therefore, repeated description thereof is omitted. Expressions of positions and directions in embodiments of this application are described by using the accompanying drawings as an example. However, changes may also be made as required, and all the changes fall within the protection scope of this application. The accompanying drawings in embodiments of this application are merely used to illustrate a relative position relationship and do not represent an actual scale.

The terms "first", "second", and the like in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

It should be noted that specific details are set forth in the following description for ease of understanding this application. However, this application can be implemented in a plurality of manners different from those described herein, and a person skilled in the art can make similar inferences without departing from the connotation of this application. Therefore, this application is not limited to the specific implementations disclosed below.

For ease of understanding, terms in embodiments of this application are first explained.

The term "and/or" describes only an association relationship between associated objects and indicates that three relationships may exist. For example, A and/or B may indicate the following three cases: Only A exists, both A and B exist, and only B exists.

"A plurality of" means two or more.

"Connection" should be understood in a broad sense. For example, "connection" may be a detachable connection, a nondetachable connection, a direct connection, or an indirect connection through an intermediate medium. "Fastening" should also be understood in a broad sense. For example, "fastening" may be direct fastening or indirect fastening through an intermediate medium.

The orientation terms mentioned in embodiments of this application, for example, "upper", "lower", "front", "rear", "left", "right", "inside", "outside", "side", "top", and "bottom" are merely directions with reference to the accompanying drawings. The orientation terms are used to better and more clearly describe and understand embodiments of this application, instead of explicitly indicating or implying that a specified apparatus or element needs to have a specific orientation and be constructed and operated in a specific orientation, and therefore cannot be understood as limitations on embodiments of this application.

The following describes embodiments of this application with reference to the accompanying drawings in embodiments of this application.

The following embodiment of this application provides a battery pack. The battery pack may be used in application scenarios such as a photovoltaic energy storage system.

For example, the photovoltaic system includes a photovoltaic panel, a direct current/direct current converter, an energy storage container, and a direct current/alteniating current converter. The photovoltaic panel is configured to convert solar energy into direct current electric energy. The direct current/direct current converter is configured to: convert a direct current generated by the photovoltaic panel into an adjustable direct current, and then output the direct current to an energy storage container to store the electric energy. Generally, to increase a capacity of the battery pack, the battery pack includes a plurality of cells connected in series or in parallel. In addition, to detect a working status, a state of charge, a thermal runaway risk, and a thermal management requirement of the cell in real time, a temperature of the cell needs to be performed. A temperature of a battery is monitored in real time, so that potential risks such as overheating or overcooling of the battery can be effectively prevented. Therefore, a service life of the battery is prolonged, and safety of the battery is improved. Temperature sampling accuracy is crucial for efficient and safe use of the battery. In practice, a thermistor is usually used to collect the temperature of the cell, and one thermistor needs one collection port. The battery pack includes a plurality of cells. If a thermistor needs to be disposed on a surface of each cell, one battery pack has a plurality of collection ports, a size of the battery pack is increased, and wiring inside the battery pack is complex. Therefore, how to reduce a quantity of collection ports while accuracy of sampling a temperature of the battery pack is ensured becomes an urgent problem to be resolved.

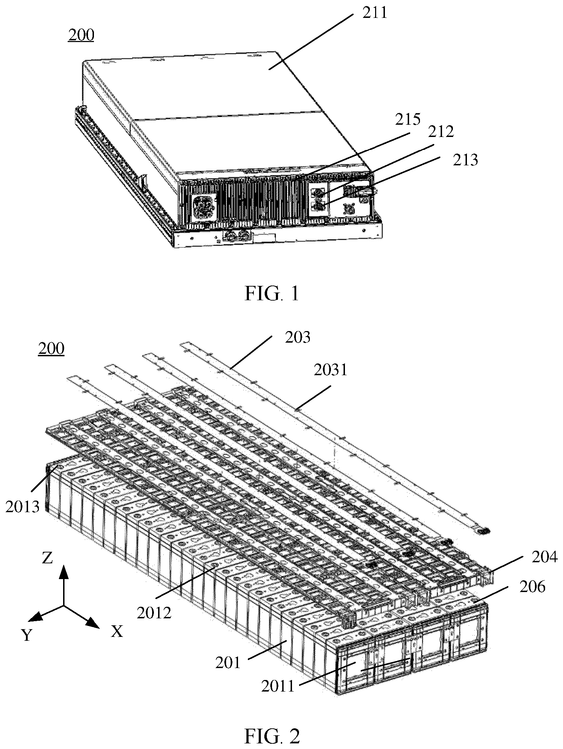

This application provides a battery pack 200. For a structure, refer to a diagram of a structure of the battery pack 200 shown in FIG. 1 and an exploded view of a structure of a battery module 206 shown in FIG. 2. The battery pack 200 includes a housing 211 and the battery module 206. The housing 211 is configured to accommodate the battery module 206. There may be a plurality of battery modules 206. For example, there are four columns of battery modules 206 arranged in a Y direction in FIG. 2. The battery module 206 includes a plurality of cells 201, and the plurality of cells 201 are disposed in parallel in an X direction. The X direction is a length direction of the battery pack 200, the Y direction is a width direction of the battery pack 200, and a Z direction is a height direction of the battery pack 200. Because positions of the cells 201 in the battery pack 200 are different (for example, distances between the cells 201 and the housing 211 are different, or contact positions between the cells 201 and a liquid cooling plate are different), heat dissipation capabilities of the cells 201 are different. Therefore, surface temperatures of the plurality of cells 201 are different. The plurality of cells 201 include a first cell 2011, a second cell 2012, and a third cell 2013. The first cell 2011, the second cell 2012, and the third cell 2013 are spaced apart in the length direction of the battery pack. The first cell 2011 is closer to a front panel 215 of the battery pack than the second cell 2012 and the third cell 2013, the third cell 2013 is closer to a rear panel of the battery pack than the second cell 2012 and the first cell 2011, and the front panel 215 and the rear panel (not shown in the figure) are disposed opposite to each other in the length direction. Because a wiring terminal, a power module, or the like is disposed on the front panel 215, generally, a cell closer to the front panel 215 has a higher temperature and a higher temperature change rate. The first cell 2011 located at a front end of the plurality of cells 201 is closest to the front panel 215, and has a highest temperature change rate. The second cell 2012 located at the middle of the plurality of cells 201 is far away from a side wall of the housing 211, effect of heat dissipation through the side wall of the housing 211 is poor, and a temperature of the second cell 2012 is higher than that of another cell 201 in a same module. The third cell 2013 located at a rear end of the plurality of cells 201 is farthest away from the front panel 215. In addition, the third cell 2013 is closest to the side wall of the housing 211, the effect of heat dissipation through the side wall of the housing 211 is the best, and a temperature of the third cell 2013 is generally lower than that of another cell 201 in the same module. A first thermistor 2021, a second thermistor 2022, and a third thermistor 2023 are disposed on top cover surfaces of the first cell 2011, the second cell 2012, and the third cell 2013 respectively, to learn of temperatures of the first cell 2011, the second cell 2012, and the third cell 2013.

Generally, a temperature range of the battery pack 200 during normal charging is 0°C to 65°C, and a temperature range of the battery pack 200 during normal discharging is -30°C to 65°C. Thermistors 202 detect temperatures of a cell 201 with a highest temperature and a cell 201 with a lowest temperature in the battery pack 200 respectively, so that a temperature range of the entire battery pack 200 can be learned. Before the battery pack 200 is delivered, specific positions of a cell 201 with the highest temperature change rate (the first cell 2011), the cell 201 with the highest temperature (the second cell 2012) and a cell 201 with a lowest temperature (the third cell 2013) are learned through a simulation test. Then, the thermistors 202 are mounted on surfaces of the cell 201 with the highest temperature change rate, the cell 201 with the highest temperature, and the cell 201 with the lowest temperature. In this design, a temperature range of the battery module 206 can be obtained, and detection accuracy can be improved. To collect the temperature of the cell 201 by using the thermistor 202, an independent collection port needs to be provided in the battery pack 200. In comparison with a solution in which a plurality of collection ports need to be provided for disposition of a thermistor 202 on each cell 201, in this embodiment of this application, in a solution in which the thermistors 202 are disposed only on the cell with the highest temperature change rate, the cell with the highest temperature, and the cell with the lowest temperature in the battery pack 200, a quantity of thermistors 202 can be effectively reduced, so that a quantity of collection ports of the thermistors 202 are reduced, collection wire harnesses are reduced, cable connections inside the battery pack 200 are simplified. Therefore, a size of the battery pack 200 is reduced, and energy density of the battery pack 200 is increased.

It should be noted that, being located at the middle of the plurality of cells 201 does not mean that the second cell 2012 is located at the center of the plurality of cells 201. Before the battery pack 200 is delivered, the position of the cell 201 with the highest temperature is obtained through the simulation test. Generally, the cell 201 with the highest temperature is not a cell 201 close to the side wall in the battery pack 200, but is generally located at a specific position in the middle of the plurality of cells 201. Therefore, the middle of the plurality of cells 201 may be understood as a position between the front end of the plurality of cells 201 and the rear end of the plurality of cells 201. In other words, the positions of the first cell 2011, the second cell 2012, and the third cell 2013 in the battery pack 200 shown in FIG. 2 are merely examples, and a person skilled in the art may select different positions of the first cell 2011, the second cell 2012, and the third cell 2013 based on different application scenarios.

A top cover of the cell 201 is generally made of a metal material, and a two-dimensional code is engraved on the top cover of the cell 201 during delivery, and is used as an identifier of the cell 201. The thermistor 202 may be disposed at an opening at the two-dimensional code on the top cover surface of the cell 201. Top patches are disposed on the top cover surfaces of the first cell 2011, the second cell 2012, and the third cell 2013. The top patch is made of an insulating material, and the top patch is disposed on a top cover of a battery, so that the top patch can achieve an insulation function, to prevent a top cover plate from being short-circuited with an external line. In addition, the top patch can achieve a protection function, to prevent the top cover of the cell 201 from being scratched and damaged. Because the thermistor 202 needs to be disposed on the top cover surface of the cell 201, an opening needs to be provided on the top patch, and the opening is configured to accommodate the thermistor 202. In addition, the top patch is further provided with an opening for a positive electrode post and a negative electrode post to pass through. Two adjacent cells 201 are connected to positive electrode posts and negative electrode posts of adjacent cells 201 through aluminum bars 214.

A thermally conductive adhesive is provided between the thermistor 202 and a top cover surface of a cell 201 on which the thermistor 202 is disposed. The thermally conductive adhesive is provided between the thermistor 202 and the top cover of the cell 201, so that a temperature difference between the thermistor 202 and the top cover of the cell 201 can be reduced. Therefore, the temperature detection accuracy is improved.

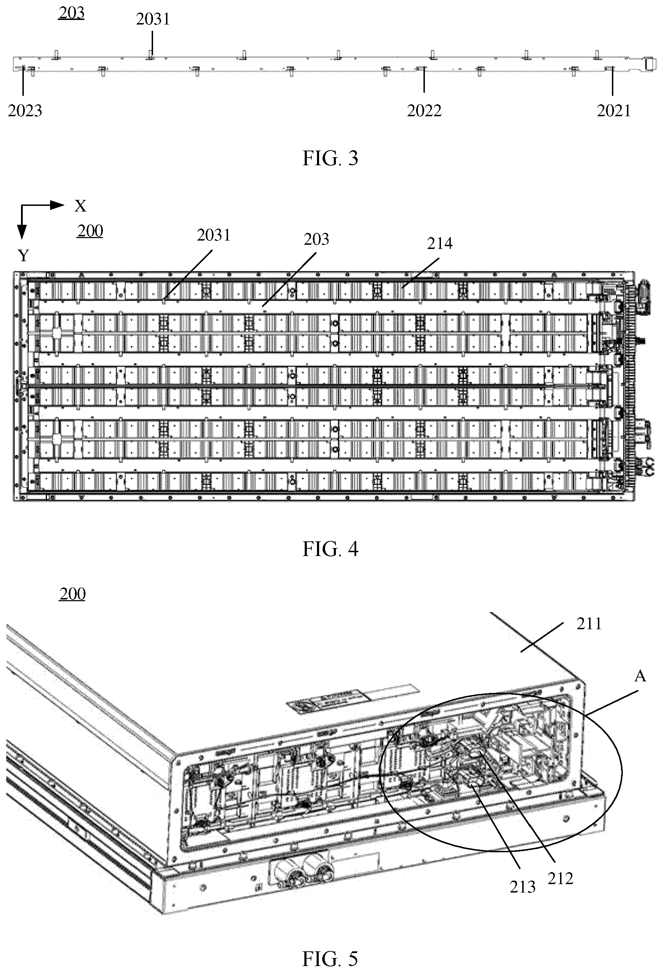

The battery pack 200 includes a circuit board 203. Refer to a diagram of a structure of the circuit board 203 shown in FIG. 3. The first thermistor 2021, the second thermistor 2022, and the third thermistor 2023 are all located on the circuit board 203. A conductive line is disposed on the circuit board 203, the thermistor 202 is electrically connected to the conductive line, and the circuit board 203 is located above the battery module 206. One thermistor 202 corresponds to one sampling line. Because only three thermistors 202 are disposed on one circuit board 203 in this embodiment, a quantity of sampling lines is reduced, and line connections inside the circuit board 203 are simplified in consideration with a solution in which a thermistor 202 is disposed on each cell 201. The thermistor 202 is disposed on the circuit board 203, heat of the cell 201 is transferred to the thermistor 202 through the thermally conductive adhesive, and then a temperature signal collected by the thermistor 202 is transferred to an external circuit through the conductive line, so that measurement accuracy of the thermistor 202 is improved. In addition, because the thermistor 202 is directly disposed on the circuit board 203, space occupied by the thermistor 202 is smaller. Mounting of the thermistor 202 and the circuit board 203 is also simpler, and connection is more reliable.

The battery pack 200 further includes a bracket 204. The bracket 204 is located above the battery module 206. The bracket 204 is provided with a mounting hole, the thermistor 202 is located in the mounting hole, and openings of the mounting hole and the top patch are adjacently provided in the Z direction. The thermistor 202 is mounted in the bracket 204, to prevent the thermistor 202 from falling off due to shaking in a process of moving the battery pack 200.

In this embodiment of this application, a flexible printed circuit board 203 (FPC for short; English name: Flexible Printed Circuit) may be used, is a printed circuit board 203 with high reliability made of a polyimide or polyester film as a substrate, and has features of high wiring density, lightweight, small thickness, and good bendability.

The thermistor 202 used in this embodiment of this application may be an NTC (Negative Temperature Coefficient, negative temperature coefficient) thermistor 202. To be specific, the NTC thermistor 202 is a resistor manufactured by using a thermosensitive material with a negative temperature coefficient, and a resistance value of the NTC thermistor 202 may decrease exponentially as a temperature increases. The thermistor 202 may be a chip resistor, or may be another type of thermistor.

The battery module 206 provided in this example of this application may be assembled in the following manner: First, a surface-mount thermistor 202 is soldered on the circuit board 203. When the battery module 206 is assembled, the thermistor 202 is aligned with the opening of the top patch and pressed down to a position of the two-dimensional code on the top cover of the cell 201 through tooling, and then the thermally conductive adhesive is injected. After static curing of the thermally conductive adhesive, bonding between the thermistor 202 and the top cover of the cell 201 is implemented.

To improve heat dissipation performance of the battery pack 200, the battery pack 200 includes a cooling plate. The cooling plate is configured to dissipate heat for the plurality of cells 201, and a coolant flows in the cooling plate. The cooling plate of the battery pack 200 may be located at the bottom of the battery pack 200. In other words, the cooling plate of the battery pack 200 may be located at the bottom of the plurality of cells 201. The cooling plate of the battery pack 200 may alternatively be located on a side edge of the battery pack 200. In other words, the cooling plate of the battery pack 200 is located between a side surface of the plurality of cells 201 and the side wall of the housing 211 of the battery pack 200. The cooling plate may alternatively be located between the cell 201 and the cell 201. For example, to enhance heat dissipation effect of the cooling plate, the cooling plate is disposed between large surfaces (side surfaces with largest areas) of the cells 201.

The first cell 2011 is located at a front end of the battery module 206, and is closest to the front panel 215. Therefore, the first cell 2011 is the cell 201 with the highest temperature change rate among all the cells 201. When the temperature change rate of the first cell 2011 is excessively high, for example, when a temperature change rate of the first thermistor 2021 is greater than or equal to a first threshold, it indicates that a thermal runaway risk may occur on the battery pack 200. Therefore, heat dissipation needs to be performed on the battery pack 200 immediately. In other words, a flow speed of the coolant in the cooling plate needs to be increased. Alternatively, a charging/discharging loop of the battery pack 200 may be cut off, so that the battery pack 200 is cut off from charging/discharging, and generates a thermal runaway alarm. The battery pack 200 may report, by using a control management system inside the battery pack 200, thermal runaway alarm information to an energy storage system to which the battery pack 200 belongs.

The second cell 2012 is located at the middle of the battery module 206, and is the cell 201 with the highest temperature in the battery pack 200. When the second thermistor 2022 is greater than or equal to a second threshold, it indicates that the temperature of the battery pack 200 is excessively high, the battery pack 200 needs to be quickly cooled, and the thermal runaway risk may occur. Therefore, measures such as increasing the flow speed of the coolant in the cooling plate and cutting off the charging/discharging loop of the battery pack 200 may be taken to reduce the thermal runaway risk of the battery pack 200, and a thermal runaway alarm may be generated. The battery pack 200 may report, by using the control management system inside the battery pack 200, thermal runaway alarm information to the energy storage system to which the battery pack 200 belongs.

Similarly, the third cell 2013 is located at the rear end of the battery module 206, is farther away from the front panel 215 than the first cell 2011 and the second cell 2012, and is the cell 201 with the lowest temperature in the battery pack 200. When a temperature of the third thermistor 2023 is less than or equal to a third threshold, it indicates that the battery pack 200 is already at an extremely low temperature, and needs to be quickly heated. Otherwise, the battery pack 200 cannot work normally. In this case, the cooling plate may be stopped from working. For example, a liquid cooling unit corresponding to the battery pack 200 is shut down, and a heating measure is taken. For example, a heating film is started to heat the battery pack 200, or the battery pack 200 is heated in a pulse heating manner. In addition, the battery pack 200 generates a low temperature alarm, and the charging/discharging loop of the battery pack 200 is cut off, so that the battery pack 200 stops charging/discharging. The battery pack 200 may report, by using the control management system inside the battery pack 200, thermal runaway alarm information and low temperature alarm information to the energy storage system to which the battery pack 200 belongs.

It should be noted that the battery pack 200 provided in this embodiment of this application may be located in a large-scale energy storage system, for example, an energy storage cabinet for industry and commerce or an energy storage container in a large ground power station. An energy storage cabinet or a control system in the energy storage container, for example, a battery management system (BMS), may perform the foregoing control action. When the temperature that is of the cell 201 and that is collected by the thermistor 202 in the battery pack 200 is abnormal, an exception information is reported to the BMS in the energy storage system, and the BMS performs the foregoing control action.

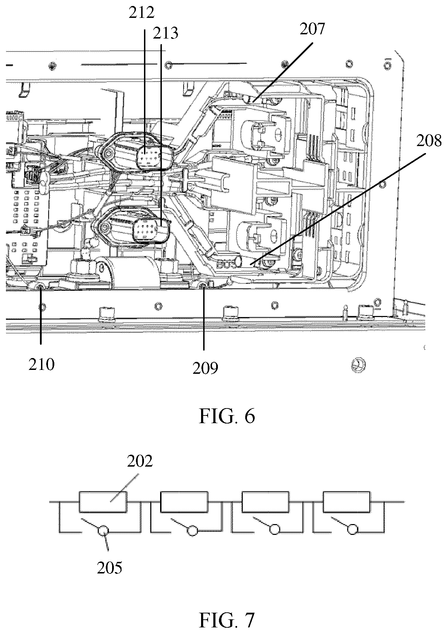

Refer to a diagram of a structure of the front panel 215 of the battery pack 200 shown in FIG. 5 and an enlarged view at a position A in FIG. 5 shown in FIG. 6. The battery pack 200 includes a wiring terminal, and the wiring terminal is configured to output electric energy of the battery pack 200. A positive interface 212 of the battery pack is connected to a positive wiring terminal 207, a negative interface 213 is connected to a negative wiring terminal 208, and the positive interface 212 and the negative interface 213 of the battery pack are configured to output the electric energy of the battery pack. The wiring terminal of the battery pack 200 includes the positive wiring terminal 207 and the negative wiring terminal 208. The positive wiring terminal 207 and the negative wiring terminal 208 are configured to: connect to an external load or a power converter, and output the electric energy of the battery pack 200 to the external load or the power converter. Generally, the wiring terminal gathers a total output current of the battery pack 200, and a temperature of the wiring terminal is generally high. Therefore, in this embodiment of this application, a thermistor 202 is disposed at each of the positive wiring terminal 207 and the negative wiring terminal 208, and the thermistor 202 is attached to each of the positive wiring terminal 207 and the negative wiring terminal 208 through riveting or a thread connection, to monitor the temperature at the wiring terminal. When a temperature of the thermistor 202 at the positive wiring terminal 207 or the negative wiring terminal 208 is greater than or equal to a fourth threshold, it indicates that the temperature is excessively high and there is a thermal runaway risk at this time, and a thermal management measure should be taken in time, for example, increasing the flow speed of the coolant in the cooling plate, stopping charging/discharging of the battery pack 200, and/or generating a thermal runaway alarm by the battery pack 200.

To further improve safety performance of the battery pack 200, a first fuse 209 is usually disposed between the positive wiring terminal 207 and the positive port of the battery module 206, and a second fuse 210 is disposed between the negative wiring terminal 208 and the negative port of the battery module 206. If a temperature of the fuse is excessively high due to overcurrent or overtemperature that occurs on the battery pack 200, the fuse may automatically blow, to cut off charging/discharging of the battery pack 200. To monitor the temperature at the fuse in real time, in this embodiment of this application, thermistors 202 are disposed on the first fuse 209 and the second fuse 210 respectively, and the thermistors 202 are respectively attached to the first fuse 209 and the second fuse 210 through riveting or a thread connection. When a temperature of the thermistor 202 at the first fuse 209 or the thermistor 202 at the second fuse 210 is greater than or equal to a fifth threshold, the flow speed of the coolant in the cooling plate may be increased, the battery pack 200 may stop charging/discharging, and/or the battery pack 200 may generate a thermal runaway alarm.

Refer to the diagram of the structure of the circuit board 203 shown in FIG. 3 and a top view of the battery module 206 shown in FIG. 4. The battery module 206 includes the plurality of cells 201, and any two adjacent cells 201 are electrically connected through aluminum bars 214. If two adjacent cells 201 are connected in series, a positive electrode post of one of the two adjacent cells 201 is electrically connected to a negative electrode post of the other cell 201 through the aluminum bar 214, and the two cells 201 need to be electrically connected through two aluminum bars 214. One voltage collection sheet 2031 is disposed on one aluminum bar 214, and the voltage collection sheet 2031 is configured to collect a voltage of the cell 201. A plurality of voltage collection sheets 2031 are disposed on the circuit board 203, the plurality of voltage collection sheets 2031 are spaced apart in a first direction, the plurality of voltage collection sheets 2031 are separately disposed on the aluminum bars 214 of the two adjacent cells 201, and the plurality of voltage collection sheets 2031 are respectively configured to collect voltages of the plurality of cells 201.

A voltage collection sheet 2031 on the top cover surface of the first cell 2011 and the first thermistor 2021 are spaced apart, a voltage collection sheet 2031 on the top cover surface of the second cell 2012 and the second thermistor 2022 are spaced apart, and a voltage collection sheet 2031 on the top cover surface of the third cell 2013 and the third thermistor 2023 are spaced apart.

To detect the temperature of the entire battery pack 200 more accurately, thermistors 202 may be disposed on top cover surfaces of some cells 201 in addition to the first cell 2011, the second cell 2012, and the third cell 2013, and the thermistors 202 may be evenly distributed on the circuit board 203. The thermally conductive adhesive is provided between the top cover surface of the cell 201 and the thermistor 202, and thermistors 202 on top cover surfaces of these cells 201 are connected in series. The thermistors 202 are connected in series, so that a quantity of detection ports can be reduced while detection accuracy is improved. When a thermistor 202 on a top cover surface of one cell 201 in some cells 201 is faulty, an average temperature of the other cells 201 of the some cells 201 is used as a temperature of the one cell 201, to avoid a phenomenon in which the temperature cannot be detected after the thermistor 202 is faulty.

In an example, to prevent temperature collection efficiency of another cell 201 from being affected when the thermistor 202 is faulty, a switch 205 may be connected in parallel to two ends of the thermistor 202 on the top cover surface of the cell 201. FIG. 7 is a diagram of a connection between thermistors 202 connected in series. When the switch 205 is turned off, the thermistor 202 on the top cover surface of the cell 201 is configured to detect temperatures of at least some cells 201. If a thermistor 202 of a specific cell 201 is faulty, switches 205 connected in parallel to two ends of the thermistor 202 may be turned on, to bypass the faulty thermistor 202, so that an entire collection loop is not affected. In addition, an average temperature of adjacent cells 201 may be used as a temperature of the cell 201 corresponding to the faulty thermistor 202.

In another example, to prevent temperature collection efficiency of another cell 201 from being affected when the thermistor 202 is faulty, thermistors 202 may be disposed on top cover surfaces of some or all of the cells 201 other than the first cell 2011, the second cell 2012, and the third cell 2013. The battery pack 200 is configured to: detect the temperatures of the second cell 2012 and the third cell 2013 and the temperatures of the other cells 201 within fixed interval duration, calculate temperature differences between the second cell 2012 and the other cells 201 and temperature differences between the third cell 2013 and the other cells 201, and store the data to a cloud. When the thermistor 202 on the top cover surface of the second cell 2012 or the third cell 2013 is faulty, the battery pack 200 is configured to: calculate the temperature of the second cell 2012 based on temperature differences between the second cell 2012 and the at least some cells 201 and the temperatures of the other cells 201, or calculate the temperature of the third cell 2013 based on the temperature differences between the third cell 2013 and the other cells 201. In other words, temperatures of the other cells 201 + (historical temperature differences between the second cell 2012 and the other cells 201) is used as the temperature of the second cell 2012, and the temperatures of the other cell 201 - (historical temperature differences between the other cells 201 and the third cell 2013) is used as the temperature of the third cell 2013, so that a case in which the temperatures of the second cell 2012 and the third cell 2013 cannot be learned in time after the thermistors 202 on the top cover surfaces of the second cell 2012 and the third cell 2013 are faulty is avoided, and detection efficiency of the temperature of the cell 201 is improved.

Based on a same inventive concept, this application further provides an energy storage cabinet. The energy storage cabinet includes at least one battery cluster, the battery cluster includes a plurality of battery packs 200, and the plurality of battery packs 200 are stacked. When a temperature change rate of a first cell 2011 is greater than or equal to a third threshold, a battery cluster in which the first cell 2011 is located stops charging/discharging; when a temperature of a second cell 2012 is greater than or equal to a second threshold, a battery cluster in which the second cell 2012 is located stops charging/discharging; and/or when a temperature of a third cell 2013 is less than or equal to the third threshold, a battery cluster in which the third cell 2013 is located stops charging/discharging. The battery pack 200 is used inside the energy storage cabinet, so that working of an entire battery cluster can be stopped when a temperature of the battery pack is excessively high or excessively low. Therefore, a risk of burning and explosion of the energy storage cabinet can be reduced.

When thermal runaway occurs on the battery pack 200 in the energy storage cabinet, the energy storage cabinet needs to have an alarm function, to notify a user that there is a risk in the energy storage cabinet. When the temperature change rate of the first cell 2011 is greater than or equal to the third threshold, the energy storage cabinet generates a thermal runaway alarm; when the temperature of the second cell 2012 is greater than or equal to the second threshold, the energy storage cabinet generates a thermal runaway alarm; and/or when the temperature of the third cell 2013 is less than or equal to the third threshold, the energy storage cabinet generates a low temperature alarm. When the temperature or a temperature change rate of the battery pack 200 is excessively high, the thermal runaway alarm is generated, to enhance user perception and perform maintenance in time.

The foregoing embodiments are merely intended for describing the technical solutions of this application rather than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A battery pack, wherein the battery pack is configured to accommodate a battery module, the battery module comprises a plurality of cells, the plurality of cells are arranged in parallel, the plurality of cells comprise a first cell, a second cell, and a third cell, the first cell, the second cell, and the third cell are spaced apart in a length direction of the battery pack, the first cell is closer to a front panel of the battery pack than the second cell and the third cell, the third cell is closer to a rear panel of the battery pack than the second cell and the first cell, and the front panel and the rear panel are disposed opposite to each other in the length direction.

2. The battery pack according to claim 1, wherein the battery pack comprises a wiring terminal, the wiring terminal is configured to output electric energy of the battery pack, the wiring terminal comprises a positive wiring terminal and a negative wiring terminal, and a thermistor is disposed at each of the positive wiring terminal and the negative wiring terminal.

3. The battery pack according to claim 2, wherein a fuse is disposed between the positive wiring terminal and a positive port of the battery module, another fuse is disposed between the negative wiring terminal and a negative port of the battery module, the fuse is provided with a thermistor, and the another fuse is provided with a thermistor.

4. The battery pack according to any one of claims 1 to 3, wherein top patches are disposed on top cover surfaces of the first cell, the second cell, and the third cell, the top patch is provided with an opening, and the thermistor is disposed in the opening.

5. The battery pack according to claim 4, wherein a thermally conductive adhesive is provided between the thermistor and a top cover surface of a cell on which the thermistor is disposed.

6. The battery pack according to any one of claims 1 to 5, wherein the battery pack comprises a circuit board, thermistors of the first cell, the second cell, and the third cell are all located on the circuit board, a conductive line is disposed on the circuit board, the thermistors are electrically connected to the conductive line, and the circuit board is located above the battery module.

7. The battery pack according to claim 6, wherein any two adjacent cells in the plurality of cells are electrically connected through aluminum bars; and
a plurality of voltage collection sheets are disposed on the circuit board, the plurality of voltage collection sheets are spaced apart in an arrangement direction of the plurality of cells, the plurality of voltage collection sheets are respectively disposed on the aluminum bars of the two adjacent cells, and the plurality of voltage collection sheets are respectively configured to collect voltages of the plurality of cells.

8. The battery pack according to claim 7, wherein a voltage collection sheet on the top cover surface of the first cell and the thermistor on the top cover surface of the first cell are spaced apart, a voltage collection sheet on the top cover surface of the second cell and the thermistor on the top cover surface of the second cell are spaced apart, and a voltage collection sheet on the top cover surface of the third cell and the thermistor on the top cover surface of the third cell are spaced apart.

9. The battery pack according to any one of claims 1 to 8, wherein the battery pack comprises a cooling plate, the cooling plate is configured to dissipate heat for the plurality of cells, and a coolant flows in the cooling plate.

10. The battery pack according to claim 9, wherein when a temperature change rate of the first cell is greater than or equal to a first threshold, a flow speed of the coolant in the cooling plate is increased, the battery pack stops charging/discharging, and/or the battery pack generates a thermal runaway alarm.

11. The battery pack according to claim 9 or 10, wherein when a temperature of the second cell is greater than or equal to a second threshold, a flow speed of the coolant in the cooling plate is increased, the battery pack stops charging/discharging, and/or the battery pack generates a thermal runaway alarm; and
when a temperature of the third cell is less than or equal to a third threshold, a flow speed of the coolant in the cooling plate is reduced, the battery pack stops charging/discharging, the battery pack is heated, and/or the battery pack generates a low temperature alarm.

12. The battery pack according to claim 2, wherein the battery pack comprises a cooling plate, wherein when a temperature of the thermistor at the positive wiring terminal or the negative wiring terminal is greater than or equal to a fourth threshold, a flow speed of a coolant in the cooling plate is increased, the battery pack stops charging/discharging, and/or the battery pack generates a thermal runaway alarm.

13. The battery pack according to claim 3, wherein when a temperature of the thermistor at the fuse or the thermistor at the another fuse is greater than or equal to a fifth threshold, a flow speed of a coolant in the cooling plate is increased, the battery pack stops charging/discharging, and/or the battery pack generates a thermal runaway alarm.

14. The battery pack according to any one of claims 1 to 13, wherein thermistors are disposed on top cover surfaces of at least some cells other than the first cell, the second cell, and the third cell in the plurality of cells, the thermistors on the top cover surfaces of the at least some cells are connected in series, and when a thermistor on a top cover surface of one cell in the at least some cells is faulty, an average temperature of the other cells of the at least some cells is used as a temperature of the one cell.

15. An energy storage cabinet, wherein the energy storage cabinet comprises at least one battery cluster, the battery cluster comprises a plurality of battery packs according to any one of claims 1 to 14, and the plurality of battery packs are stacked; and
when the temperature change rate of the first cell is greater than or equal to the first threshold, a battery cluster in which the first cell is located stops charging/discharging;
when the temperature of the second cell is greater than or equal to the second threshold, a battery cluster in which the second cell is located stops charging/discharging; and/or
when the temperature of the third cell is less than or equal to the third threshold, a battery cluster in which the third cell is located stops charging/discharging.
